Europäisches Patentamt

European Patent Office

Office européen des brevets

(11) Publication number: **0 186 718**
**B1**

(12) **EUROPEAN PATENT SPECIFICATION**

(45) Date of publication of patent specification: **18.01.89**　　(51) Int. Cl.⁴: **B 60 R 25/02**

(21) Application number: **84309102.6**

(22) Date of filing: **27.12.84**

(54) Keyless steering shaft lock arrangement.

(43) Date of publication of application:
**09.07.86 Bulletin 86/28**

(45) Publication of the grant of the patent:
**18.01.89 Bulletin 89/03**

(84) Designated Contracting States:
**DE FR GB**

(56) References cited:
**EP-A-0 121 165**

**PATENT ABSTRACTS OF JAPAN, vol. 8, no. 100
(M-295) 1537r, 11th May 1984; & JP - A - 59 14
551 (KOKUSAN KINZOKU KOGYO K.K.)
25.01.1984**

(73) Proprietor: **KOKUSAN KINZOKU KOGYO
KABUSHIKI KAISHA
2-8-2, Kamata
Ota-ku Tokyo (JP)**

(72) Inventor: **Sata, Hidekazu
1004, Nakasone Oaza-Minami
Kasukabe-shi Saitama-ken (JP)**

(74) Representative: **Barker, Rosemary Anne et al
Barlow, Gillett & Percival 94 Market Street
Manchester M1 1PJ (GB)**

Courier Press, Leamington Spa, England.

## Description

This invention relates to a keyless steering shaft lock arrangement, particularly but not exclusively for an automobile, as specified in the preamble of claim 1, for example as disclosed in EP—A—0121165.

With a keyless locking arrangement, the steering shaft of a vehicle is unlocked automatically upon manual depression of a plurality of push buttons in predetermined order by the vehicle driver who is then able to turn the steering shaft as he desires.

When this type of keyless steering shaft lock is employed, however, care must be taken to prevent the shaft locking operation from occurring while the engine is running or indeed while the vehicle is running. In particular, steps must be taken to prevent unintentional shaft-locking during engine running caused by careless depression of the controlling push buttons by the driver.

When the operating motor included in the shaft locking arrangement for moving a locking bar to its shaft locking position and returning it to its unlocking position is of the unidirectional type (rather than the reversible type) a serious malfunction of the locking mechanism could occur if an unlocking signal is, by accident, generated again during the unlocking stage of the mechanism. In this event, the mechanism could be locked again. Similarly, if a locking signal is twice generated the mechanism could be left unlocked.

When the aforesaid push-button-controlled steering lock arrangement is fitted to a vehicle, the vehicle driver must operate a control switch for the ignition circuit separately from manipulation of push buttons for the steering lock arrangement. This additional operation is somewhat troublesome.

Moreover, as is well known, the engine ignition circuit generally includes an accessory circuit for operation of a radio or cassette player and interior lighting, and provision must be made so that these can operate when the engine is switched off.

An object of the invention is to provide an improved keyless steering shaft lock arrangement capable of positively preventing the occurrence of steering-shaft locking while the engine is running or while the vehicle is running.

A further object is to provide effective means for positively preventing a dangerous situation by making energization of the engine ignition circuit impossible in the locked position of the vehicle steering shaft.

A further object of the invention is to provide an improved steering-shaft lock arrangement capable of preventing accidental interruption of the engine ignition circuit during engine-running.

A further objection is to provide an improved keyless steering shaft lock arrangement capable of preventing a malfunction in shaft-locking or unlocking upon twice or further repeated issuance of an operation instruction signal during the shaft locked or unlocked condition.

Another object of the invention is to provide an improved keyless steering lock arrangement in which the troublesome separate manipulation of the control switch for the engine ignition circuit is obviated.

Yet another object is to provide an improved engine ignition circuit adapted for automatic interruption of signal supply to the accessory circuit if the starter motor circuit is supplied with a signal for energization thereof.

The first above object is achieved in accordance with the invention by provision of a keyless steering shaft lock arrangement comprising a stationary housing, an electric motor mounted in or on the housing, a shaft-locking and unlocking bar engageable with a vehicle steering shaft and slidably mounted in the housing for movement between a first position for unlocking and a second position for locking of the steering shaft, intermediate means for transmitting power from the motor to the bar and a control circuit for on-off control of the motor, characterised in that the control circuit includes an engine-running sensor connection to a locking circuit for operating a motor circuit for the electric motor.

The other objects are achieved by the features set forth in claims 2 to 10 appended hereto.

The invention will be described further, by way of example, with reference to the accompanying drawings, in which:

Fig. 1 is a vertical section of a steering shaft lock unit (without the general electronic circuit cooperating therewith) of a preferred embodiment of the arrangement of the invention;

Fig. 2 is a top plan view of the lock unit shown in Fig. 1 but with the housing lid removed;

Fig. 3 is a substantially vertical section, to an enlarged scale, of part of the lock unit shown in Fig. 1 illustrating the bearing section rotatably supporting the steering shaft, the latter being only partially shown;

Fig. 4 is a sectional view along the line A—A' shown in Fig. 2;

Fig. 5 is an end view of the rotator of the lock unit shown in Fig. 1;

Fig. 6, consisting of two parts, Fig. 6(A) and Fig. 6(B) separated from each other by a section line X—X', is a general electronic circuit arrangement adapted for control of the steering lock unit shown in Figs. 1 to 5 and the engine ignition circuit of a vehicle;

Fig. 7 is an enlarged circuit diagram of the counter in the circuit illustrated in Fig. 6; and

Fig. 8 is a timing chart illustrating the operation of the counter shown in Fig. 7.

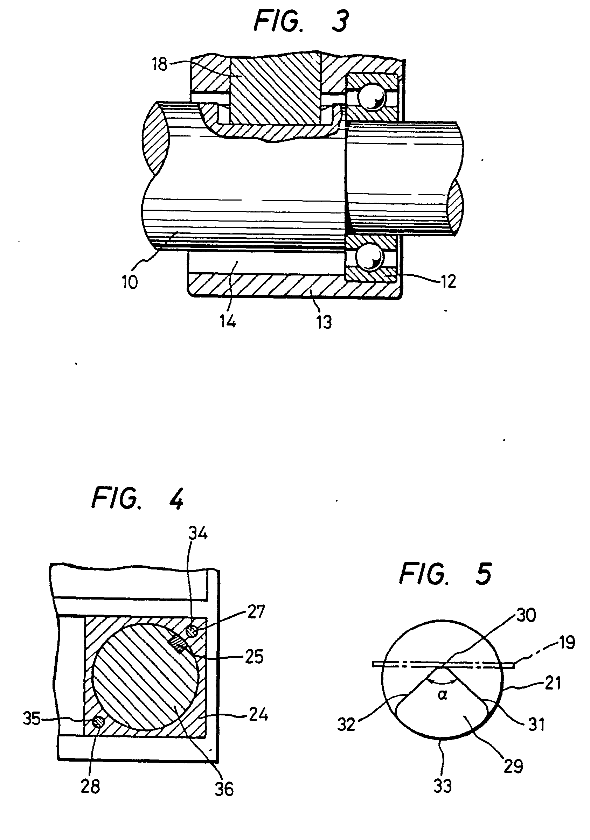

In a preferred embodiment of the steering lock arrangement of the invention as illustrated in the accompanying drawings, a conventional steering shaft 10 is rotatably supported by a ball bearing unit 12 (Fig. 3) which is positively supporting in a housing 13. This housing 13 is formed with a hollow cylindrical portion 14 in which the bearing unit 12 is positively mounted, for example by a pressure fit.

In the upper part of the housing 13, there is a guide opening 17 which communicates with the hollow cylindrical space 14 and with container chambers 15. The upper part of the housing 13 is closed by a pressure-fit or push-on lid 16 which assists theft-prevention.

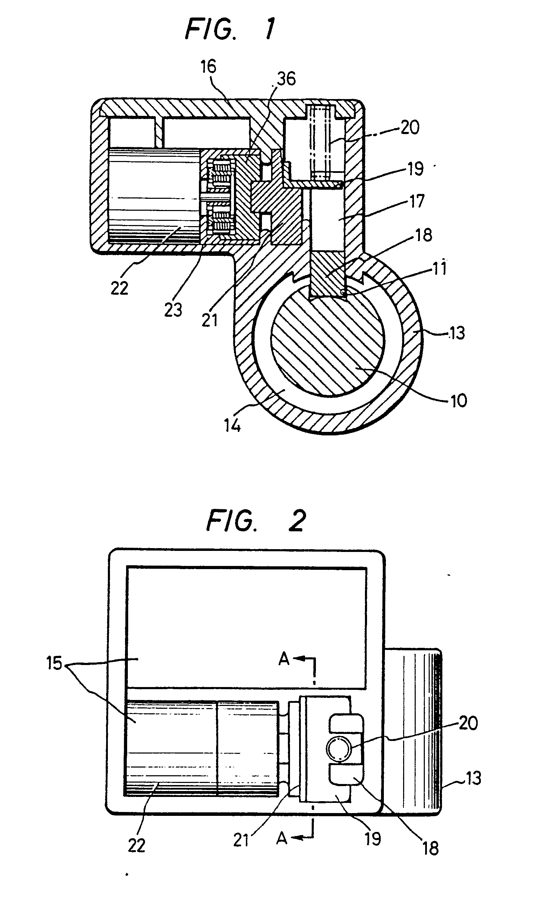

A locking bar 18 is slidably mounted in the guide opening 17, the bar 18 being shown in Fig. 1 in its advanced locking position in engagement with a reception recess 11 formed on the steering shaft 10. The locking bar 18 is accompanied by a so-called "hanger" 19 which slides in unison with the bar 18.

A coil spring 20 is mounted between the lid 16 and the hanger 19 under compression and thus urges the bar 18 to move downwards as shown in Fig. 1.

A member 21, called a "rotator", which is kept in pressure contact with the hanger 19, acts to prevent excess forward movement of the bar 18, as will later be described more fully.

An electric motor 22 and a gearing unit 23 are mounted in the frame 13 as shown in Fig. 1. Rotary movement is transmitted from the motor 22 through the gearing unit 23 to an output shaft 36. The gearing unit 23 is housed in a casing 24 the cross-section of which is shown in more detail in Fig. 4.

In the casing 24, two diametrically opposed openings 27 and 28 are provided for housing respective contactless reed switches 34 and 35. The former switch 34 is adapted for sensing the shaft-unlocked position, while the latter switch 35 senses the shaft-locked position.

When the motor 22 is energized, output torque is transmitted therefrom through the reduction gearing 23, the output shaft 36, a mechanical coupling provided between the latter and the rotator 21 and the hanger 19 to the locker bar 18, so as to raise the latter from its locking position shown in Fig. 1 towards its unlocking position.

As shown in Fig. 5, the rotator 21 is formed with a sector cam 29, having a cam angle alpha of 15 to 150 degrees, preferably about 90 degrees, between the respective side slopes 31 and 32. In the shaft-locking position, the hanger 19 is kept in pressure contact with the rounded cam tip 30 as shown in Fig. 5, under the action of compression spring 20 (Fig. 1). The rotator 21 is, of course, mechanically connected through the output shaft 36 and the gearing unit 23 to the motor 22.

The gears of the gearing unit 23 are preferably of profile-shifted type so as to transmit the largest possible torque whilst still allowing the whole unit to be highly compact.

As mentioned, in the gear case 24 of the gearing unit 23 there are a pair of diametrically opposed openings 27, 28 in which the respective reed switches 34, 35 are mounted. The former reed switch 34 is actuated by close proximity to or access co-operation with a magnet 25 embedded in output shaft 36 when the locking bar 18 is raised from its shaft locking position, by rotation of the motor 22 (through the gearing 23 and the hanger 19), to its unlocking position. In this way, the unlocking position of the bar 18 can be sensed.

Conversely, the opposite reed switch 35 is actuated when the motor 22 is rotated so that the bar 18 moves to its locking position, by close proximity or access co-operation with the magnet 25. In this way, the locking position of the bar 18 can be sensed.

It will be appreciated by any person skilled in the art that the said reed switches may, in appropriate circumstances, be replaced by microswitches or like means.

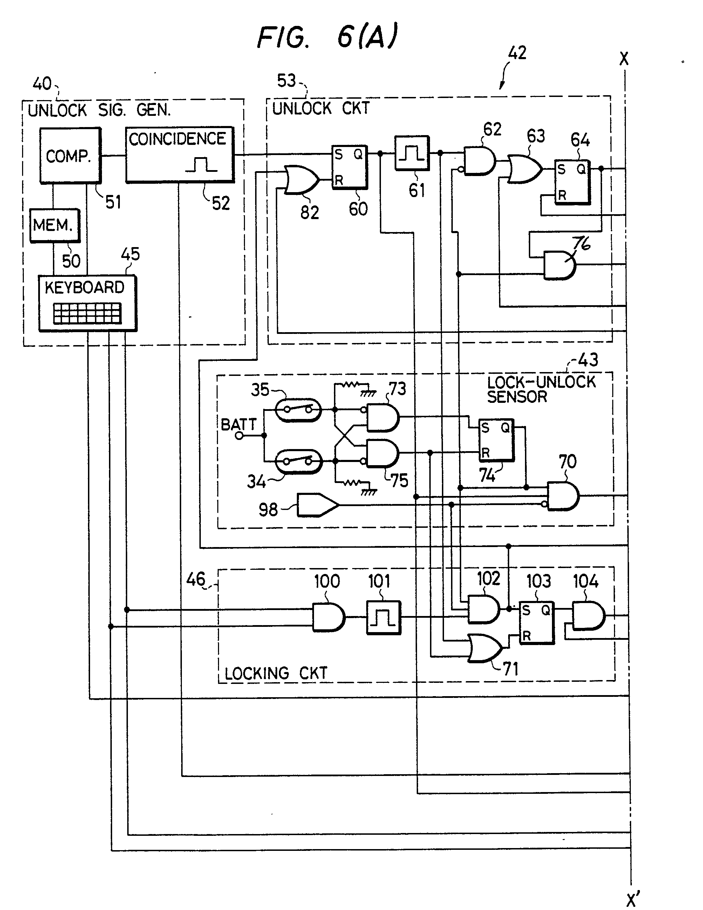

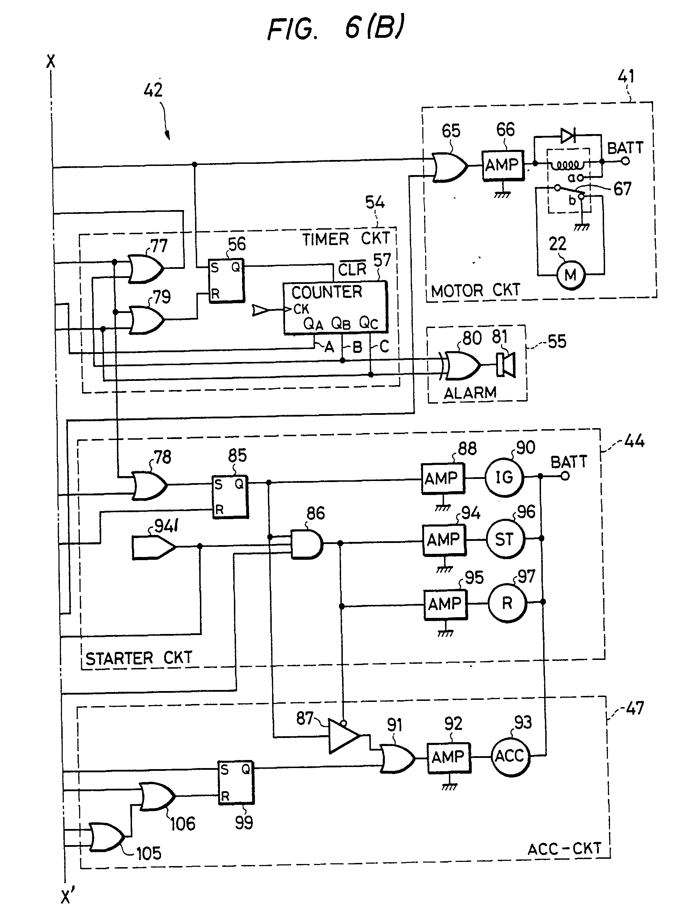

The motor 22 is controlled by a keyless steering lock control circuit which is generally shown in Fig. 6 and has a plurality of button switches arranged in a matrix on a keyboard 45.

Within this overall control circuit, there are an unlock signal generating circuit 40, a motor circuit 41, a bar stick-prevention circuit 42, a lock-and-unlock sensor circuit 43, an engine starter circuit 44, a shaft-locking circuit 46, and an ACC-control circuit 47.

The bar stick-prevention circuit 42 comprises an unlocking circuit 53, a timer circuit 54 and an alarm circuit 55.

Outputs of the button switches of the matrix keyboard 45 are connected to a comparator circuit 51 and several gates as shown. When selected button switches of the keyboard 45 are depressed a series of signals representing an intended number are sent to the comparator 51 and comparison is made between that number and a number stored in the comparator memory 50. When coincidence occurs therebetween, a coincidence signal is delivered from the comparator 51 to a coincidence signal output circuit 52 causing an unlock instruction signal to be delivered therefrom.

This instruction signal is fed to a setting terminal S of an RS-flip-flop 60 which is thus brought into set position. The latched signal is delivered from the RS-flip-flop 60 through its Q-terminal to a one-shot output circuit 61 and an AND-gate 70, respectively. The circuit 61 delivers its one-shot output to an AND-gate 62 and an OR-gate 71, respectively. The other input terminal of the AND-gate 62 is adapted for receiving L-signal from a Q-terminal of an RS-flip-flop 74 which is reset by the output of an AND-gate 75 connected to outputs from both the closable reed-switch 35 and the operable reed switch 34 when the locking bar 18 is situated at its locking position. Thus, the output from the RS-flip-flop 60, when the bar 18 is in its shaft-locking position, is shaped in the one-shot output circuit 61 and delivered through both the AND-gate 62 and an OR-gate 63 to the set-terminal of an RS-flip-flop 64. The latter will deliver output from its Q-terminal through an OR-gate 65 to an amplifier 66 so as to activate a relay 67 at its "A"-terminal and energize the drive motor 22.

Actuation of the motor 22 causes the bar 18 to be lifted up to its unlocking position. At the same time, the reed switch 34 is switched on under the influence of the magnet 25, while the other reed switch 35 is turned off. Thus, the AND-gate 73 will deliver output for setting the RS-flip-flop 74. Output will be delivered from the Q-terminal of the latter to the reserving terminal of an AND-gate 76. At the same time, the opposite inlet of the latter receives from the RS-flip-flop 64 through its Q-terminal, and the AND-gate 76 delivers the output through the OR-gates 77 and 79, respectively, to the RS-flip-flops 64 and 56 for resetting both these so that the respective Q-terminals thereof becoming L-level. By this action, a counter circuit 57 is cleared and will terminate its counting job.

Should the rod 18 for any reason, accidental or otherwise, be stuck in its locking position in engagement with the locking recess 11 of the steering shaft 10 and thus be unable to move towards its unlocking position, the alarm circuit 55 will be actuated to issue an alarm signal in the following way.

When the RS-flip-flop 64 is set in the aforementioned way, its Q-terminal output is fed to the OR-gate 65, the AND-gate 76 and the RS-flip-flop 56. Thus, the RS-flip-flop 56 is set and an H-level signal is fed to the counter circuit 57 at its clear terminal.

The latter circuit is thus reset and starts again to count the input clock pulses. When a pre-determined counting period elapses *without* initiation of movement of the bar 18 from its locking to unlocking position, the alarm circuit 55 begins to deliver alarm signals under the action of the input signal from the counter circuit 57.

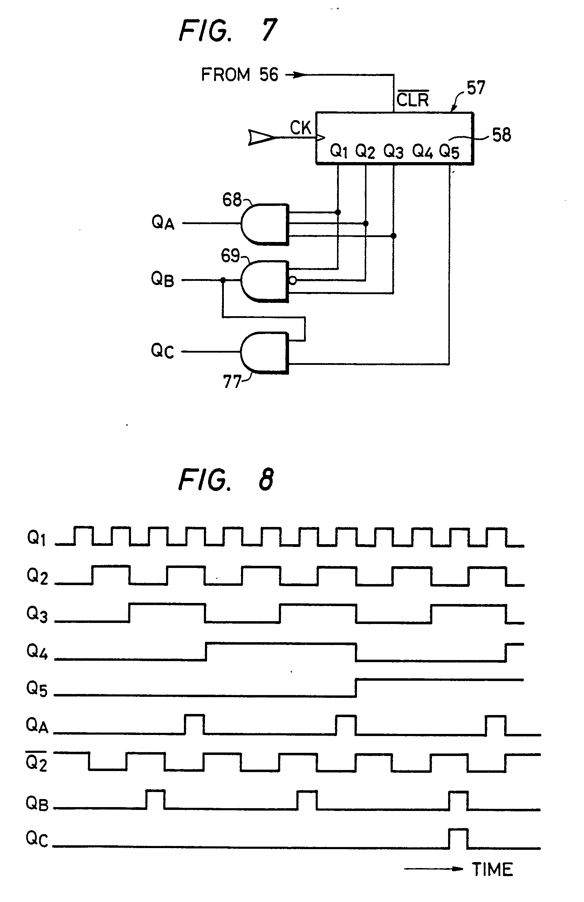

As shown in more detail in Fig. 7, the counter circuit 57 comprises a counter 58 adapted for reception of the Q-terminal output of the RS-flip-flop 56 as well as the clock signal, and AND-gates 68 and 69 connected respectively to output terminals $Q_1$—$Q_3$ of the said counter 58. Those signals shown specifically in the timing chart of Fig. 8 are delivered from the output terminals $Q_1$ to $Q_5$. Also the AND-gates 68 and 69 deliver output signals $Q_A$ and $Q_B$, respectively, upon reception of respective output signals delivered from the output terminals $Q_1$ to $Q_3$. The AND-gate 69 differs from those previously mentioned in that it receives the $Q_2$-output signal at its reversing output terminal. A further AND-gate 77 receives $Q_B$- and $Q_5$- signals for delivery of a $Q_C$-signal.

In order to permit the output terminals $Q_1$ to $Q_5$ deliver the required respective output signals by the commonly known flip-flop operation, the AND-gate 68 delivers $Q_A$-signal after about seven seconds counted from the initiation of a counting operation by the counter 58 and again generates $Q_A$-output signal about eight seconds thereafter. The AND-gate 69 delivers $Q_B$-output signal after about five seconds counted from the start of the said counting operation, and again generates $Q_B$-output signal about eight seconds thereafter.

$Q_C$-output signal is delivered after about twenty one seconds counted from the initiation of the counting operation simultaneously with the generation of the $Q_B$-output signal.

It will be clear from the foregoing that if the shaft-locking bar 18 cannot move towards its unlocking position even when the RS-flip-flop 64 has been brought into its set-position, no reset signal will be delivered, from the RS-flip-flop 74 and thus the RS-flip-flop 56 will continue in its set-position and the counter 57 will count the clock pulses as before. Thus, upon lapse of the pre-determined time period, the $Q_B$-output signal will be generated.

$Q_B$-output signal generation will occur after the said time period where the motor 22 has executed its regular unlocking rotation for urging the locking bar 18 towards its unlocking position. A buzzer 81 of the alarm circuit 55 will operate for a predetermined time period by actuation of an exclusive OR-gate 80, and at the same time, a reset signal will be fed to the RS-flip-flop 64 through the OR-gate 77. Thus, the buzzer 81 will alert the vehicle driver to the fact that the locking bar 18 is accidentally stuck in its position locking the steering shaft and that it is necessary to manually and forcibly turn the steering shaft so as to release the bar 18. Also, by the resetting of the RS-flip-flop 64, the amplifier 66 is switched off so that current supply to the motor 22 is terminated.

Upon lapse of a further predetermined time period, the $Q_A$-output signal is delivered from the counter 57, the RS-flip-flop 64 is set through the OR-gate 63 and a Q-terminal output signal is generated.

Thus, current will be delivered through the OR-gate 65, the amplifier 66 and the relay 67 to the motor 22 which is, therefore, energized. If the driver turns the steering wheel manually at this time the locking bar 18 will be freed from its stuck condition. With the general circuit shown in Fig. 6, the foregoing operation will be repeated twice.

If the locking bar 18 should not be freed from its stuck condition even when the foregoing twice repeated bar-freeing operation has been executed, the $Q_B$- and the $Q_C$-output signals are generated. Upon generation of the former signal $Q_B$, the RS-flip-flop 64 is caused to set. Upon generation of the $Q_C$-output signal which is fed through the OR-gates 79 and 82, respectively, the RS-flip-flops 56 and 60 are reset.

The number of times the alarm circuit 55 has to be operated and the length of time such alarm operation continues, depends, naturally, upon the length of the timing pulse and the circuit constants of each of the related gate circuits. Therefore, by modifying the circuit parameters, the number of reception times and the length of each operation period can be modified as occasion requires.

At the final stage where both the $Q_B$- and $Q_C$-outputs are generated simultaneously, the exclusive OR-gate 80 does not deliver any output signals so the buzzer 81 is unable to operate.

When the RS-flip-flop 56 is brought to its reset position, the counter circuit 55 is cleared and the counting operation thereof is thus terminated.

When both the RS-flip-flops 60 and 64 are reset, their respective Q-terminal outputs are of L-level. Thus, the amplifier 66 is switched off and the relay 67 changes its operational position from "a" to "b" contact. Therefore, both end terminals of the motor 22 are short-circuited through the related relay and the motor 22 is brought to a dead halt by the action of an attached braking unit (not shown).

When a shaft-unlocking action is executed by regular rotation of the motor 22, the output signal of the AND-gate 76 is fed through the OR-gate 78 to the setting terminal of an RS-flip-flop 85, whereby the latter issues its output signal from its attributed output terminal Q to an AND-gate 86, a three-state buffer 87 and an amplifier 88 which delivers its output so as to close the ignition circuit 90. The three-state buffer 87 delivers its output signal when the AND-gate 86 delivers no output, the said output signal being fed through an OR-gate 91 and an amplifier 92 to an accessory circuit 93 which is thus closed. It should be noted that the term "accessory" is abbreviated to "ACC".

The input terminals of the AND-gate 86 are in communication with the RS-flip-flop 85, and engine sensor 941 and the keyboard button switch array 45. The design of the general circuit shown in Fig. 6 is so selected that with the vehicle engine running at a higher rotational speed than that which has been predetermined, the engine sensor 941 is kept at L-level, whilst with the engine nearly (or correctly) in its stationary condition, the sensor 941 is maintained at H-level.

During the stationary condition of the engine and with the RS-flip-flop 85 brought into setting, when any selected one of the buttons at keyboard 45 is depressed, output continues to be delivered to the AND-gate 86 which will be thus activated. The output of the latter is forwarded through amplifiers 94 and 95, whereby a starter circuit 96 and a resistor short circuit 97 are energized so as to actuate the starter motor for starting up the engine.

At this time, and under the influence of output from the AND-gate 86, the ACC-circuit 93 is switched off by the inverting action of the three-state buffer 87.

However, once the vehicle engine (not shown) has been started by the operation of the AND-gate 86, the starter motor (not shown) cannot be started even by depressing the conventional starting button switch (not shown) because of the existence of L-level output at the engine sensor 941.

If accidental application of outside noises or shocks should occur during practical running of the vehicle and cause the RS-flip-flop 85 acting to keep the ignition circuit 90 closed to reset, the last-mentioned circuit will be opened and the engine will stop against the will of the vehicle driver. Such circumstances could lead to a serious accident.

Provision is therefore made for the AND-gate 70, which will be actuated by simultaneous application of the output of the RS-flip-flop 60 and of the output from a running sensor 98 adapted for delivery of L-level signal during the vehicle-running or of H-level signal during the vehicle stoppage, to be set by a shaft-unlocking signal. As will be seen from Fig. 6, the gate 70 will deliver its output signal when it simultaneously receives H-level output signal from the RS-flip-flop 74.

After execution of the shaft-unlocking operation and during the vehicle-running, the running sensor 98 originally delivers L-level output signal which is converted to H-level signal by the inverting action of the AND-gate 70, the latter, therefore, continuing its output signal to the set terminal of the RS-flip-flop 85 which can thus deliver its stable output signal.

As an alternative mode for closure of the ACC-circuit 93, switches on the keyboard 45 are depressed in a certain predetermined order for delivery of coded signals to the comparator 51. When the coded input digits coincide with those already stored in the memory 50, the output of the coincidence signal output circuit 52 is fed to the set terminal of an RS-flip-flop 99 which is then brought into its set position for delivery of an output signal from its Q-terminal. This output is then fed through the OR-gate 91 and the amplifier 92 to close the ACC-circuit 93. In this way, the driver may, for example, enjoy a radio programme without having to input an unlock instruction signal.

The shaft-locking circuit 46 comprises an AND-gate 100, a one-shot circuit 101, an AND-gate 102, an RS-flip-flop 103 and an AND-gate 104.

The AND-gate 100 receives an output from the button switches on the keyboard 45. The one-shot circuit 101 is triggered by the output from the AND-gate 100. The AND-gate 102 receives respective outputs from the one shot circuit 101, the RS-flip-flop 74 and the running sensor 98. The output of the AND-gate 102 is fed to the set terminal of the RS-flip-flop 103 and its output signal at the Q-terminal is fed to the AND-gate 104 which will deliver its output signal to the OR-gate 65 upon reception of inputs from the RS-flip-flop 103 and the engine sensor 941.

The shaft-locking circuit 46 can act when the vehicle has stopped and the steering lock has been unlocked. More specifically, when two specifically selected push buttons on the keyboard 45 are depressed, the AND-gate 100 will deliver its output whereby the one shot circuit 101 delivers its output to the AND-gate 102. When the vehicle is stationary at this time, the AND-gate 102 will be on, its output being fed through the OR-gate 82 to the RS-flip-flop 60 which is thus reset so that its output at the Q-terminal is at L-level and AND-gate 70 is switched off. At the same time, the RS-flip-flop 85 is caused to reset due to the output signal of the AND-gate 102, the Q-terminal output of the RS-flip-flop 85 becoming L-level so as to switch the amplifier 88 and the AND-gate 86 off. Therefore both amplifiers 94 and 95 become non-conductive. Furthermore, the amplifier 92 is switched off through the three-state buffer 87 and the OR-gate 91.

At the same time, the output signal from the AND-gate 102 is fed to the set terminal of the RS-flip-flop 103 which is thus caused to set, the Q-terminal output thereof being fed to the AND-gate 104.

If, at this time, the engine is stationary, the engine sensor 941 will deliver H-level output, so as to cause an output from the AND-gate 104 through the OR-gate 65 to the amplifier 66, the latter thus being switched on and the relay arm 67 being transferred to "a"-contact for energizing the motor 22..

Upon revolution of this motor 22, motion is transmitted from the attached gearing unit 23 and its output shaft 36 is turned clockwise 180 degrees from the position shown in Fig. 4 towards the shaft-locking position. At the 180 degree-revolutional position, the magnet 25 will act upon the reed switch 35 so as to bring the latter into its on condition. At the shaft-locking position, as shown in Fig. 6, the reed switch 34 is in off condition, while the other switch 35 is in its on condition. This results in the AND-gate 75 delivering an output so as to reset the RS-flip-flop 74 whereby its Q-terminal output becomes nil. At the same time, the RS-flip-flop 103 is caused to reset by the OR-gate 71. Its Q-terminal output thus ceases to deliver so as to stop revolution of the motor 22.

When the ACC-circuit 93 has been exclusively switched on, if it is desired to extinguish the circuit, either one of two specific button switches on the keyboard 45 can be depressed to deenergize the ignition circuit 90. When one of these buttons is depressed its output is delivered via OR-gates 105 and 106 to the RS-flip-flop 99 which is therefore reset, thus terminating its R-terminal output via the OR-gate 91 for making the amplifier 92 non-conductive. The reset terminal of the RS-flip-flop 99 now receives Q-output signal from the RS-flip-flop 60 via the OR-gate 106. The issuance of an alarm signal from the buzzer 81 serves to positively notify the vehicle driver that the locking bar 18 is stuck in the reception recess 11 on steering shaft 10.

After disengagement of the locking bar 18 from its co-operating reception recess 11, the RS-flip-flop 103 is set in the manner explained above, its output signal being transmitted through the three-state buffer 87 and the OR-gate 91 to the amplifier 92 which thus becomes conductive. It should, however, be noted that when the starter circuit 96 has been actuated, the circuit 87 will switch off.

Turning now to the operation of the whole illustrated arrangement, the vehicle driver depresses predetermined switches arranged on the keyboard 45 which is fixedly mounted on the vehicle door or a dashboard in the vehicle interior. The resulting digit signal is compared by the comparator 51 with those digits previously entered and stored in the memory 50. When there is coincidence between all the digits, an output signal indicating coincidence will be delivered from coincidence signal generator 52 to the RS-flip-flop 62 which is thus set. In the prevailing shaft-locking position of the bar 18, the RS-flip-flop 74 does not deliver any output signal from its Q-terminal. The RS-flip-flop 60 delivers its Q-terminal output which is transmitted via the one shot output circuit 61, the AND-gate 62 and the OR-gate 63 to the RS-flip-flop 64 which is then caused to set.

The Q-terminal output of the RS-flip-flop 64 is then delivered via the OR-gate 65 and the relay 67 to the motor 22 which is, therefore, activated. The torque of the motor 22 is transmitted through the gearing unit 23 and the output shaft 36 to the rotator 21 which acts to lift the locking bar 18 (together with the hanger 19) from its locking position to its unlocking position against the action of the coil spring 20. Generally speaking, the motor 22 may be of the unidirectional type. However, it may be replaced by a reversible motor.

At the shaft-locking position shown in Fig. 4, which has been brought about by a 180-degree revolution of the output shaft 36, the reed switch 35 is in its off condition, while the opposite reed switch 34 has been brought into its on condition. At this time, the AND-gate 73 delivers an output signal to the RS-flip-flop 74 which is thus set. The Q-terminal output of the latter is fed to the reversing input terminal of the AND-gate 62 which is thus switched off. Thus accidental actuation of the RS-flip-flop 64 by noise is positively prevented. An input signal is also fed to the respective reset terminals of the RS-flip-flops 64 and 56 which are thus reset.

In the case where the bar 18 is stuck in engagement with the locking recess 11 on the steering shaft 10 such that there is considerable difficulty in execution of the shaft unlocking operation, the alarm circuit 55 is caused to operate twice, as explained, by reception of the aforementioned input signal $Q_B$ causing resetting of the RS-flip-flop 64 twice so as to energize the motor 22. If the bar 18 is still stuck after all this, the output signal $Q_C$ is delivered, thus resetting both the RS-flip-flops 56 and 60. At the same time, the RS-flip-flop 64 is caused to reset by a third delivery of $Q_B$-output. Thereafter, the driver must depress again the selected buttons on the keyboard 45 in the predetermined manner.

When the steering shaft lock has been unlocked, output signals are delivered from the Q-terminals of the RS-flip-flops 64 and 74 to the AND-gate 76 which in turn delivers output to the OR-gate 78, so as to set the RS-flip-flop 85. Thus, the ignition circuit 90 is switched on, while the ACC-circuit 93 is also switched on by way of the three-state buffer 87 and the OR-gate 91.

When the driver depresses the selected switches on the keyboard 45, the AND-gate 86 is turned on, the starter circuit 96 and the resistor short circuit 97 become conductive, while the buffer 87 is temporarily turned off, thereby interrupting the ACC-circuit. When the engine is brought into operation, the engine sensor 941 is at L-level so the AND-gates 86 and 104 are turned off. Therefore, the engine starter circuit 96 is turned off, while the buffer 87 is turned on again and the ACC-circuit 93 is energized. Thus, any false actuation of the motor 22 by accidental noises and shocks is suppressed.

Furthermore, while the vehicle is running, the output of the running sensor 98 is kept at L-level for maintaining the RS-flip-flop 60 in its setting condition. In this position, the AND-gate 70 continuously delivers a set signal through the OR-gate 78 to the RS-flip-flops 85 to prevent the ignition circuit 90 being cut off unintentionally during running (moving) of the vehicle.

After the vehicle has been intentionally stopped, when the driver intends to lock the steering shaft 10, he must depress the specifically selected two button switches on the keyboard 45 simultaneously. An instruction signal will then be fed successively through the AND-gate 100 and the one shot circuit 101 to the AND-gate 102 which delivers its output signal through the OR-gate 82 to the RS-flip-flop 60, thus terminating the Q-terminal delivery of the latter.

At the same time, the output from AND-gate 102 is fed to the reset terminal of the flip-flop 85, so as to terminate its Q-terminal output and thus turn both the ignition circuit 90 and the accessory circuit 93 off. As a result of this operation of the engine ceases automatically.

Following therefrom, the engine sensor 941 delivers an output of H-level. The output from the AND-gate 102 is fed to the RS-flip-flop 103 at its set terminal. The Q-terminal output of the latter and the output from the engine sensor 941 are fed to the AND-gate 104, and an instruction signal is fed therefrom through the OR-gate 65 to the motor circuit 41 so as to energize the motor 22. Upon rotation of the motor 22, its output shaft 36 will be rotated 180 degrees clockwise with regard to the position shown in Fig. 4 from the shaft-unlock-position indicated in Fig. 5. Therefore, the reed switch 34 is turned off, while the reed switch 34 is turned on on account of access to, or close proximity of, the magnet 25.

Therefore, the AND-gate 75 delivers output so as to bring the RS-flip-flops 74 and 103 into setting. At the same time, the rotator 21 has been rotated to the shaft-locking position shown in Fig. 5 so the hanger 19 and the bar 18 move forward under the action of the coil spring 20, until the bar 18 is brought into intimate engagement with the reception recess 11 on the steering shaft 10.

## Claims

1. A keyless steering shaft lock arrangement, comprising a stationary housing (13), an electric motor (22) mounted in or on the housing (13), a shaft-locking and unlocking bar (18) engageable with a vehicle steering shaft (10) and slidably mounted in the housing (13) for movement between a first position for unlocking and a second position for locking of the steering shaft, intermediate means for transmitting power from the motor (22) to the bar (18), and a control circuit (40 to 47) for on-off control of the motor (22), characterised in that the control circuit includes an engine-running sensor (941) connected to a locking circuit (46) for operating a motor circuit (41) for the electric motor (22).

2. An arrangement as claimed in Claim 1 wherein the engine-running sensor (941) is connected to an engine-starter circuit (44).

3. An arrangement as claimed in claim 2 further including a sensor (98) for sensing the vehicle-running and stationary positions and for delivering different signals for the said two vehicle positions the sensor (98) being connected to the starter circuit (44), and to the locking circuit (46), the electric motor (22) being allowed to rotate to a position which corresponds to the locking position of the bar (18) upon issuance of an output from the locking circuit (46) only when the sensor (98) delivers a signal indicating that the vehicle is stationary.

4. An arrangement as claimed in Claim 1, 2 or 3 wherein the locking circuit (46) is adapted for delivery of a lock instruction signal to the motor-operating circuit (41) exclusively in the unlocked condition of the bar (18), and further including an unlocking circuit (53) which is adapted for delivery of an unlock instruction signal to the motor-operating circuit (41) exclusively in the locked condition of the bar (18).

5. An arrangement as claimed in claim 4 wherein the unlocking circuit (53) is provided with an AND-gate (62) which is turned off during the unlocked condition of the bar (18).

6. An arrangement as claimed in claim 4 or 5 wherein the locking circuit (46) is provided with an AND-gate (102) which is kept off during the locked condition of the bar (18).

7. An arrangement as claimed in claim 1 further including an unlocking circuit (53) adapted for delivery of an unlock instruction signal to the motor (22), and a starter circuit (44) adapted for energizing an engine ignition circuit (90) exclusively upon simultaneous reception of outputs from both the unlocking circuit (53) and a locking and unlocking sensing circuit (43).

8. An arrangement as claimed in claim 1 in combination with an engine ignition circuit (90) and an accessory circuit (47) such that each time an unlocking signal is generated in the arrangement it is delivered to a starter circuit (44) which is operatively connected to the ignition circuit (90) and the accessory circuit (47).

9. An arrangement as claimed in claim 1 in combination with an engine ignition circuit (90), said arrangement comprising a starter circuit (44) adapted for automatic energization upon unlocking of the steering lock, an accessory circuit (47) adapted for energization of a radio-receiving set, interior lights and the like accessories, and gate circuit means for both the starter circuit (44) and the accessory circuit (47), the gate circuit means being so arranged that when a first signal is supplied to the starter circuit (44) for energization thereof, supply of a second signal being occasionally fed to the accessory circuit (47) is interrupted.

10. An arrangement as claimed in claim 1 wherein the motor circuit (41) includes a changeover relay (67) comprising a first contact (a) connected to a current source, a second contact (b) connected to earth as well as to one of the terminals of the motor (22), and a common terminal connected to the other terminal of the motor (22), the relay (67) being so designed and arranged that when it is to be de-energized the common terminal and the second terminal (b) are short-circuited, while when it is to be energized, the common terminal and the first terminal (a) are conductingly connected to each other.

## Patentansprüche

1. Lenkspindelschloßanordnung ohne Schlüssel, umfassend ein stationäres Gehäuse (13), einen in oder auf dem Gehäuse (13) angeordneten Elektromotor (22), eine die Spindel verriegelnde und entriegelnde Stange (18), die mit einer Fahrzeuglenkspindel (10) in Eingriff bringbar und zur Bewegung zwischen einer ersten Position für die Entriegelung und einer zweiten Position für die Verriegelung der Lenkspindel verschiebbar im Gehäuse (13) gelagert ist, Zwischenglieder für die Übertragung der Leistung vom Motor (22) zur Stange (18) und einen Steuerkreis (40 bis 47) zur Ein-Aus-Steuerung des Motors (22), dadurch gekennzeichnet, daß der Steuerkreis einen Motorlauf-Sensor (941) einschließt, der mit einem Verriegelungsstromkreis (46) zum Schalten eines Motorstromkreises (41) für den Elektromotor (22) verbunden ist.

2. Anordnung nach Anspruch 1, worin der Motorlauf-Sensor (941) mit einem Anlaßmotorstromkreis (44) verbunden ist.

3. Anordnung nach Anspruch 2, weiterhin einschließend einen Sensor (98) zum Erfassen der Fahrzeuglauf- und -ruhestellungen und zur Erzeugung verschiedener Signale für diese beiden Fahrzeugstellungen, wobei der Sensor (98) mit dem Anlasserstromkreis (44) und mit dem Verriegelungsstromkreis (46) verbunden und der Elektromotor (22) erst in eine Stellung drehen kann, die der Verriegelungsstellung der Stange (18) nach Ausgabe einer Ausgangsinformation aus dem Verriegelungsstromkreis (46) entspricht, wenn der Sensor (98) ein Signal erzeugt, das angibt, daß das Fahrzeug in Ruhestellung ist.

4. Anordnung nach Anspruch 1, 2 oder 3, worin der Verriegelungsstromkreis (46) ein Verriegelungsbefehlsignal an den Motorantriebskreislauf (41) ausschließlich im entriegelten Zustand der Stange (18) erzeugen kann, und weiterhin einschließend einen Entriegelungsstromkreis (53), der ein Entriegelungsbefehlssignal an den Motorantirbesstromkreis (41) ausschließlich im verriegelten Zustand der Stange (18) erzeugen kann.

5. Anordnung nach Anspruch 4, worin der Entriegelungsstromkreis (53) mit einem UND-Gatter (62) versehen ist, das während des entriegelten Zustands der Stange (18) ausgeschaltet ist.

6. Anordnung nach Anspruch 4 oder 5, worin der Verriegelungsstromkreis (46) mit einem UND-Gatter (102) versehen ist, das während des verriegelten Zustands der Stange (18) ausgeschaltet bleibt.

7. Anordnung nach Anspruch 1, weiterhin einschließend einen Entriegelungsstromkreis (53), der dem Motor (22) ein Entriegelungsbefehlssignal zuleitet, und einen Anlasserstromkreis (44), der einen Motorzündstromkreis (90) ausschließlich nach gleichzeitigem Empfang von Ausgangssignalen sowohl aus dem Entriegelunsstromkreis (53) als aus einem Verriegelungs- und Entriegelungsabtaststromkreis (43) erregt.

8. Anordnung nach Anspruch 1 in Verbindung mit einem Motorzündungsstromkreis (90) und einem Hilfsstromkreis (47), so daß jedesmal, wenn ein Entriegelungssignal in der Anordnung erzeugt wird, es einem Anlasserstromkreis (44) zugeleitet wird, der wirksam mit dem Zündungsstromkreis (90) und dem Hilfsstromkreis (47) verbunden ist.

9. Anordnung nach Anspruch 1 in Verbindung mit einem Motorzündungsstromkreis (90), wobei die Anordnung einen Anlasserstromkreis (44) für die automatische Erregung nach der Entriegelung der Lenksäulenverriegelung, einen Hilfsstromkreis (47) für die Erregung eines Radioempfangsgeräts, der Innenbeleuchtung und ähnlichen Zubehörs, und Torschaltungsmittel sowohl für den Anlasserstromkreis (44) und den Hilfsstromkreis (47) umfaßt, wobei die Torschaltungsmittel so angeordnet sind, daß, wenn ein erstes Signal dem Anlasserstromkreis (44) zu seiner Erregung geliefert wird, die Lieferung eines zweiten Signals, das gelegentlich zum Hilfsstromkreis (47) geliefert wird, unterbrochen wird.

10. Anordnung nach Anspruch 1, worin der Motorstromkreis (41) ein Umschaltrelais (67) einschließt, das einen ersten Kontakt (a), der mit einer Stromquelle verbunden ist, einen zweiten Kontakt (b), der an Erde gelegt sowie mit einer der Klemmen des Motors (22) verbunden ist, und eine gemeinsame Klemme umfaßt, die mit der anderen Klemme des Motors (22) verbunden ist, wobei das Relais (67) so ausgebildet und angeordnet ist, daß, wenn seine Erregung aufgehoben werden soll, die gemeinsame Klemme und die zweite Klemme (b) kurzgeschlossen werden, während, wenn es erregt werden soll, die gemeinsame Klemme und die erste Klemme (a) leitend miteinander verbunden werden.

## Revendications

1. Un dispositif de verrouillage de colonne de direction sans clé, comprenant un carter stationnaire (13), un moteur électrique (22) monté dans ou sur le carter (13), une barre (18) de verrouillage et déverrouillage de colonne pouvant entrer en prise avec la colonne de direction (10) du véhicule et montée de façon coulissante dans le carter (13) de façon à se déplacer entre une première position pour le déverrouillage de la colonne de direction et une seconde position pour son verrouillage, des moyens intermédiaires pour transmettre de l'énergie du moteur (22) à la barre (18), et un circuit de commande (40 à 47) pour la commande marche-arrêt du moteur (22), caractérisé par le fait que le circuit de commande comprend un détecteur (941) de marche du moteur de véhicule, relié à un circuit de verrouillage (46) pour exciter un circuit (41) d'actionnement du moteur électrique (22).

2. Un dispositif tel que revendiqué dans la revendication 1, dans lequel le détecteur (941) de marche de moteur de véhicule est relié à un circuit (44) de démarrage de moteur de véhicule.

3. Un dispositif tel que revendiqué dans la revendication 2, comprenant en outre un détecteur (18) pour détecter les positions de marche et d'immobilisation du véhicule et pour produire différentes signaux correspondant aux deux positions précitées du véhicule, le détecteur (98) étant relié au circuit de démarrage (44) et au circuit de blocage (46), le moteur électrique (22) étant autorisé à tourner jusque dans une position qui correspond à la position de verrouillage de la barre (18) lors de la production d'un signal de sortie par le circuit de verrouillage (46) seulement quand le détecteur (98) fournit un signal indiquant que le véhicule est immobile.

4. Un dispositif tel que revendiqué dans la revendication 1, 2 ou 3, dans lqeuel le circuit de verrouillage (46) est adapté pour produire un signal d'instruction de verrouillage au circuit d'actionnement de moteur (41) exclusivement dans la condition déverrouillée de la barre (18), et comprenant en outre un circuit de déverrouillage (53) qui est adapté pour produire un signal d'instruction de déverrouillage au circuit (41) d'actionnement de moteur exclusivement dans la condition verrouillée de la barre (18).

5. Un dispositif tel que revendiqué dans la revendication 4, dans lequel le circuit de déverrouillage (53) est pourvu d'une porte-ET (62) qui est fermée pendant la condition déverrouillée de la barre (18).

6. Un dispositif tel que revendiqué dans la revendication 4 ou 5, dans lequel le circuit de verrouillage (46) est pourvu d'une porte-ET (102), qui est maintenue fermée pendant la condition verrouillée de la barre (18).

7. Un dispositif tel que revendiqué dans la revendication 1, comprenant en outre un circuit de déverrouillage (53) adapté pour fournir au moteur (22) un circuit d'instruction de déverrouillage, ainsi qu'un circuit de démarrage (44) adapté pour exciter un circuit d'allumage de moteur de véhicule (90) exclusivement lors d'une réception simultanée de signaux de sortie du circuit de déverrouillage (53) et d'un circuit de détection de verrouillage et de déverrouillage (43).

8. Un dispositif tel que revendiqué dans la revendication 1, en combinaison avec un circuit d'allumage de moteur de véhicule (90) et un circuit d'accessoires (47) de telle sorte que, à chaque fois qu'un signal de déverrouillage est engendré dans le dispositif, il soit appliqué à un circuit de démarrage (44) qui est relié fonctionnellement au circuit d'allumage (90) et au circuit d'accessoires (47).

9. Un dispositif tel que revendiqué dans la revendication 1, en combinaison avec un circuit d'allumage de moteur de véhicule (90), ledit dispositif comprenant un circuit de démarrage (44) adapté pour une excitation automatique lors d'un déverrouillage du verrou de direction, un circuit d'accessoires (47) adapté pour une excitation d'un poste récepteur-radio, de lampes intérieures et d'accessoires analogues, et un circuit à porte pour le circuit de démarrage (44) et le circuit d'accessoires (47), le circuit à porte étant agencé de telle sorte que, quand un premier signal est appliqué au circuit de démarrage (44) pour son excitation, la génération d'un second signal appliqué occasionnellement au circuit d'accessoires (47) est interrompue.

10. Un dispositif tel que revendiqué dans la revendication 1, dans lequel le circuit de moteur (41) comprend un relais de commutation (67) comprenant un premier contact (a) connecté à une source de courant, un second contact (b) connecté à la masse ainsi qu'à une des bornes du moteur (22), et une borne commune connectée à l'autre borne du moteur (22), le relais (67) étant conçu et agencé de telle sorte que, quand il doit être désexcité, la borne commune et la seconde borne (b) sont court-circuitées alors que, quand il doit être excité, la borne commune et la première borne (a) sont reliées de façon conductrice l'une avec l'autre.

## FIG. 1

## FIG. 2

## FIG. 3

## FIG. 4

## FIG. 5

FIG. 6(A)

**EP 0 186 718 B1**

*FIG. 6(B)*

# FIG. 7

# FIG. 8